# EUROPEAN PATENT APPLICATION

(11) **EP 2 455 856 A1**
(43) Date of publication of application: **23.05.2012**
(21) Application number: 10799698.5
(22) Date of filing: 11.06.2010
(51) Int. Cl.: G06F 9/44

(54) **PROGRAM GENERATION DEVICE**

(30) Priority: 14.07.2009 JP 2009166060
(71) Applicant: Optex Co., Ltd., Shiga 520-0101 (JP)
(72) Inventor: NAGANO Masakazu, Otsu-shi Shiga 520-0101 (JP); NAKAGAWA Hiroshi, Otsu-shi Shiga 520-0101 (JP); SAWAI Masahiko, Otsu-shi Shiga 520-0101 (JP); MIZUTA Takahiro, Otsu-shi Shiga 520-0101 (JP); MATSUMOTO Kunihiro, Otsu-shi Shiga 520-0101 (JP); AMANO Hiroyuki, Otsu-shi Shiga 520-0101 (JP); SAKAMOTO Kazutaka, Otsu-shi Shiga 520-0101 (JP); AOYAMA Shinya, Otsu-shi Shiga 520-0101 (JP); KIMURA Satoshi, Otsu-shi Shiga 520-0101 (JP); SAITO Masanori, Otsu-shi Shiga 520-0101 (JP); MAGAWA Tadashi, Otsu-shi Shiga 520-0101 (JP); KOMAI Manabu, Otsu-shi Shiga 520-0101 (JP); SERATA Yuuichi, Otsu-shi Shiga 520-0101 (JP)
(74) Representative: Grünecker, Kinkeldey, Stockmair & Schwanhäusser
(86) International application number: PCT/JP2010/059928
(87) International publication number: WO 2011/007636

(57) **Abstract**

It is an object of the present invention to provide a device capable of easily generating a program for controlling a lighting device which changes in accordance with the environment and time. On a lighting program generation screen (201), one of object selection menus (211 to 214) is displayed. An operator selects one or some of graphics objects (311, 312, ..., 341, and 342) from the object selection menu (211 to 214) and arranges the selected graphics object(s) in an object arrangement area (220). The graphics objects correspond to operation programs into which a program that controls a lighting device is divided. By selecting each of the arranged graphics objects, it is possible to set an operating condition of the corresponding operation program. A control program is generated from a plurality of operation programs by associating the arrangement of the arranged graphics objects in a longitudinal direction with a chronological relation.

## Description

### Technical Field

The present invention relates to a program generation device, and more particularly to a program development support tool using a graphical user interface.

### Background Art

Development of programs generally requires high skills. This is because knowledges about program languages and hardwares are needed.

There are program development softwares using graphical user interfaces. The Visual Basic (registered trademark) allows a program development by manipulating various objects displayed on a display, with a mouse. A user sets properties of various objects and arranges the objects at desired portions, and this allows the user to visually design a screen.

Patent Documents 1 and 2 disclose softwares supporting the program development. Patent Document 1 shows a device for supporting database construction.
Patent Document 2 proposes a graphical user interface operation device for the purpose of increasing the utilization ratio of a memory and reducing the cost for storage of data.

### Prior-Art Documents

### Patent Documents

[Patent Document 1] Patent Publication No. 3018983
[Patent Document 2] Patent Publication No. 4045468

As discussed above, there are various development support softwares. In the softwares, commonly, the setting with respect to an object characterizes the operation of a program. Further, by arranging the objects with a pointing device such as a mouse or the like, it is possible to design a screen. Development of a program which changes its operation with time, however, still depends on the programming skills of a developer.

### Disclosure of Invention

It is an object of the present invention to support development of a program which changes in accordance with the time and environment, such as a control program for an equipment.

The present invention is intended for a program generation device which generates a program by using a graphical user interface. According to the present invention, the program generation device comprises a graphics object providing part, an object arranging part, and a generation part. The graphics object providing part displays a plurality of types of graphics objects on a display connected to the program generation device to provide the plurality of types of graphics objects in a selectable manner. The plurality of types of graphics objects represent operations corresponding to a plurality of types of operation programs which define operations of a lighting device. The object arranging part causes a plurality of graphics objects to be selected out of the plurality of types of graphics objects by using a pointing device and arranges the plurality of selected graphics objects in an object arrangement area displayed on the display. The generation part generates a control program which controls the lighting device by associating an arrangement relation of the plurality of graphics objects arranged by the object arranging part with a chronological relation of a plurality of operation programs which are selected.

By the program generation device, it is possible for even an operator without any knowledge about programs or hardwares to easily generate a program for controlling an operation of a lighting device which changes with time.

According to a preferred embodiment of the present invention, the object arranging part associates an arrangement of the plurality of arranged graphics objects in one direction with a chronological relation of programs, and associates an arrangement thereof in a direction orthogonal to the one direction with a relation of programs which concurrently operate.

Even the programs which define operations performed concurrently can be easily generated.

These and other objects, features, aspects and advantages of the present invention will become more apparent from the following detailed description of the present invention when taken in conjunction with the accompanying drawings.

### Brief Description of Drawings

[Fig. 1] is a view showing a maintenance work for a lighting system;
[Fig. 2] is a block diagram showing the lighting system; and
[Fig. 3] is a block diagram showing the lighting system to which an additional sensor is added.
[Fig. 4] is a block diagram showing a PC which is a program generation device;
[Fig. 5] is a view showing objects relating to generation of programs;
[Fig. 6] is a view showing a lighting program generation screen;
[Fig. 7] is a view showing object selection menus;
[Fig. 8] is a view showing a manner in which graphics objects are arranged;
[Fig. 9] is a view showing another manner in which the graphics objects are arranged;
[Fig. 10] is a view showing still another manner in which the graphics objects are arranged;
[Fig. 11] is a view showing yet another manner in which the graphics objects are arranged; and
[Fig. 12] is a view showing a simulation screen.

### Best Mode for Carrying Out the Invention

Before describing a program generation device of the present invention, discussion will be made on a lighting system which operates in accordance with a control program generated by the program generation device.

### {1. Brief Description of Lighting System}

Hereinafter, with reference to figures, description will be made on a lighting system in accordance with a preferred embodiment of the present invention. The lighting system of the preferred embodiment comprises a lighting unit 1 in which a LED lighting device, a sensor, and the like are formed integrally, a personal computer (hereinafter, referred to as a PC) 2 used for the maintenance of the lighting unit 1, and the like.

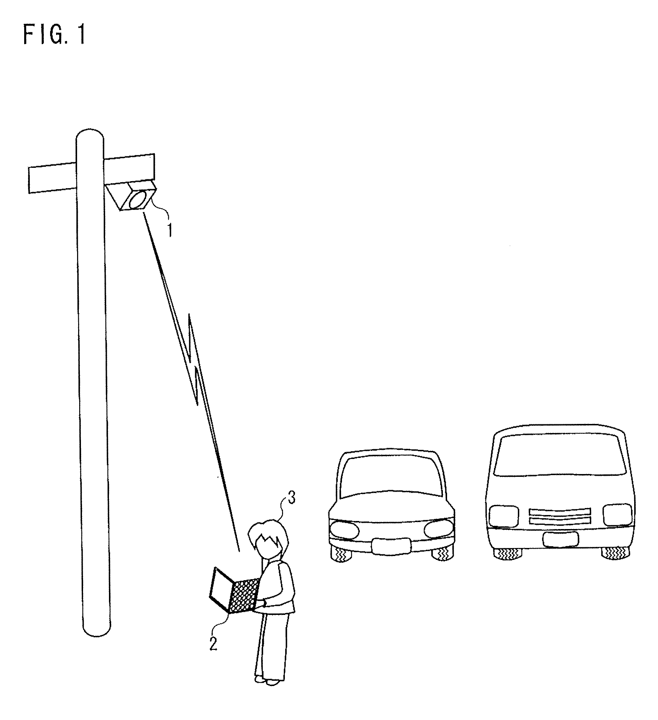

Fig. 1 is a view showing a lighting system which is set up in a parking area. In the parking area, a pole is set up and the lighting unit 1 is attached to an upper portion of the pole. The lighting unit 1 can input sensing information thereto from various sensors and control the setting of the lighting device in accordance with the sensing information.

As an example, when detection information of a human body is inputted from a human body sensor during the night, the lighting unit 1 turns on the lighting device with 100 % output to brighten the parking area. Then, when no detection information of a human body is inputted thereto, the lighting unit 1 reduces the brightness in the parking area to 50 %, to thereby reduce power consumption. Thus, by controlling the lighting output as necessary, it is possible to achieve an environmentally friendly lighting system.

As another example, the lighting unit 1 detects the illuminance in the parking area from an illuminance sensor and reduces the intensity of lighting in the parking area when the illuminance is not lower than a certain level. Then, when the illuminance is lower than the certain level, the lighting unit 1 increases the intensity of lighting in the parking area. It is thereby possible to maintain the illuminance in the parking area at a constant level while reducing the power consumption.

Fig. 1 shows a serviceman 3. The serviceman 3 uses the PC 2 to perform the maintenance of the lighting unit 1 via wireless communication. A maintenance method will be discussed in detail later, and the serviceman 3 can easily perform the maintenance of the lighting unit 1 by performing wireless communication between the PC 2 and the lighting unit 1 in the preferred embodiment.

### {2. Constitution of Lighting Unit}

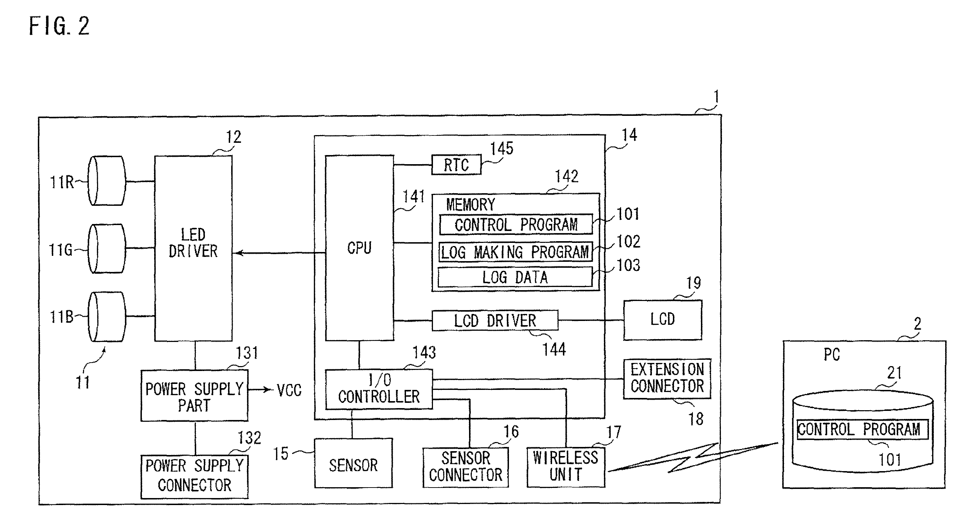

Next, with reference to Fig. 2, description will be made on a constitution of the lighting unit 1. The lighting unit 1 comprises an LED (Light Emitting Diode) 11. In the preferred embodiment, the LED 11 comprises a red LED 11R, a green LED 11G, and a blue LED 11B. The lighting device is not limited to the LED, but other light sources may be used. Further, as the LED, a white LED having different color temperature may be also used, as well as the three color (RGB) LEDs.

To the LED 11, an LED driver 12 is connected. The LED driver 12 is a unit consisting of a single IC or a plurality of ICs, which can individually control respective outputs of the LEDs 11R, 11G, and 11B. The LED driver 12 individually controls the respective outputs of the LEDs 11R, 110, and 11B, to thereby emit light of various colors. Each of the LEDs 11R, 11G, and 11B consists of a single LED element or a plurality of LED elements.

The LED driver 12 is supplied with electric power from a power supply part 131. The power supply part 131 is connected to a power supply connector 132. By connecting the power supply connector 132 to a commercial power supply, electric power is supplied to devices in the lighting unit 1, including the LED driver 12.

The lighting unit 1 comprises a control part 14 for generally controlling the lighting unit 1. The control part 14 comprises a CPU (Central Processing Unit) 141, a memory 142, an I/O controller 143, an LCD (Liquid Crystal Display) driver 144, and an RTC (Real Time Clock) 145.

In the memory 142, a control program 101 is stored. The control program 101 is a program generated by a program generation device in accordance with the present invention, which will be described later. The control program 101 is a program used to control the LED 11. The control program 101 is a program used to control the LED 11 on the basis of sensing information detected by a sensor 15. When the CPU 141 executes the control program 101, the LED 11 is controlled in accordance with the sensing information.

In the memory 142, a log making program 102 and log data 103 are stored. When the LED 11 is controlled on the basis of the control program 101, the log making program 102 stores a control record of the LED 11 into the memory 142 as log data 103.

Though not shown, a basic program such as an initial program used to perform system check and communication control of the lighting unit 1, or the like, in the memory 142.

As the memory 142, a rewritable flash memory or the like may be used. As discussed later, the control program 101 is sometimes updated in accordance with the specification change of the lighting system. By writing the updated control program into the rewritable memory 142, it is possible to freely change an operation of the lighting system. The basic program used to control the lighting unit 1 may be stored in a ROM which is separately provided. Further, the log making program 102 may be stored in a ROM as a standard program. The CPU 141 may comprise a memory which stores therein these various programs.

The I/O controller 143 is connected to the CPU 141. The I/O controller 143 is also connected to the sensor 15, a sensor connector 16, a wireless unit 17, and an extension connector 18 and controls input/output of data between these devices and the CPU 141.

The sensor 15 is a sensor which is connected to the lighting unit 1 by default. The above-described control program 101 is a program corresponding to the sensor 15. As the sensor 15, for example, a human body sensor, an illuminance sensor, a temperature sensor, an earthquake sensor, a fire sensor, or the like may be used.

To the sensor connector 16, various additional sensors are connected. The types of sensors to be added are not particularly limited. In a case where a human body sensor is attached as the default sensor 15, for example, when an illuminance sensor is intended to be additionally attached, the illuminance sensor has only to be attached to the sensor connector 16.

When an additional sensor is attached to the sensor connector 16, the lighting system controls the lighting setting also on the basis of sensing information inputted from the additional sensor. By additionally storing a control program corresponding to the additional sensor into the memory 142, the lighting unit 1 can perform the lighting control in accordance with the additional sensor.

The wireless unit 17 performs wireless communication with the PC 2. In the preferred embodiment, the wireless unit 17 performs communication using ZigBee. As wireless communication, infrared communication and wireless LAN of iEEE802.11 or the like may be used. The lighting unit 1 uses the wireless unit 17 to acquire the control program 101 stored in a storage part 21 of the PC 2.

The extension connector 18 is a connector used for connecting an extension device thereto. To the extension connector 18, a device for extending the function of the lighting unit 1 or the like is connected. Alternatively, there may be another case where a communication cable is connected to the extension connector 18 and the extension connector 18 is connected to the PC 2 through the communication cable. The serviceman 3 connects the PC 2 and the extension connector 18 with the communication cable, for example, to thereby transfer the control program 101 from the PC 2 to the lighting unit 1.

To the LCD driver 144, an LCD 19 is connected. The LCD 19 is a small-sized monitor having a size of, e.g., about 3 cm in length and about 10 cm in width and capable of displaying various condition information of the lighting unit 1. Alternatively, by using an output port of the CPU 141 to light up or blink a display LED, various condition information of the lighting unit 1 may be displayed.

### {3. Relation between Sensor and Control Program}

As discussed above, the control program 101 used to control the LED 11 is stored in the memory 142. The control program 101 is a program corresponding to the sensor 15. The control program 101 is a program used to control the LED 11 on the basis of the sensing information detected by the sensor 15.

It is assumed that the sensor 15 is, for example, a human body sensor. When the sensor 15 detects a human body, the sensor 15 notifies the CPU 141 of the detection information of the human body through the I/O controller 143. The CPU 141 executes the control program 101, and when the detection information of the human body is inputted thereto during the night, the CPU 141 generates a control signal to light up the LED 11 with, for example, 100 % output. The control signal generated by the CPU 141 is outputted to the LED driver 12, and the LED driver 12 controls the LED 11 on the basis of the control signal. The LED 11 is thereby lit up with 100 % output, to thereby brighten the parking area.

It is assumed that the sensor 15 does not notify the CPU 141 of detection information of the human body after a lapse of time. It is also assumed that the control program 101 has an algorithm to reduce the intensity of lighting to 50 % output at the point of time when one minute elapses after no human body is detected. The CPU 141 sends a control signal to reduce the intensity of light of the LED 11 to 50 % output at the point of time when one minute elapses after the detection information of the human body is received from the sensor 15 last time. Thus, the lighting setting of the LED 11 is changed on the basis of the sensing information and the operation is determined by the control program 101.

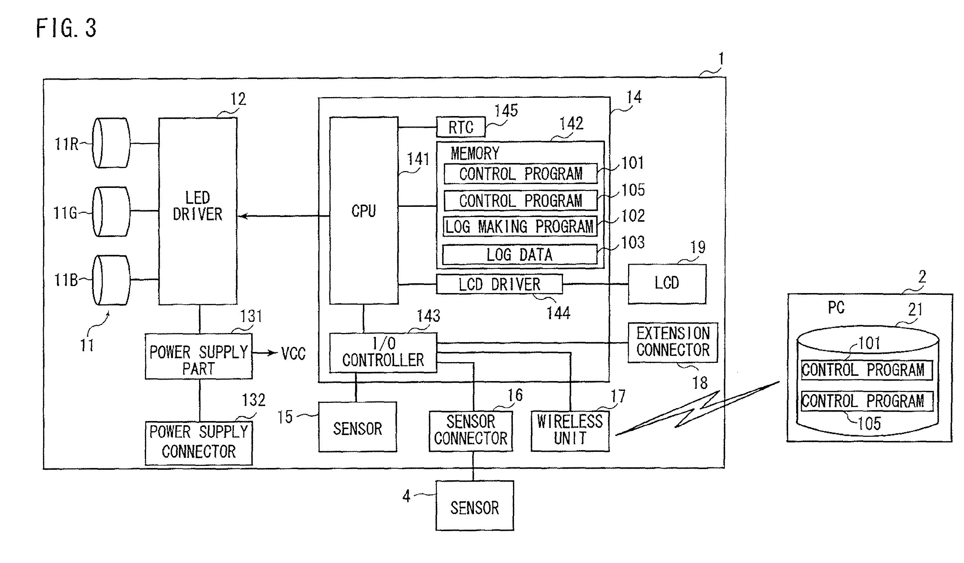

It is assumed that a new additional sensor 4 is connected to the sensor connector 16. The control program 101 described above is a program corresponding to the sensor 15. Then, as shown in Fig. 3, a control program 105 for the additional sensor 4 is prepared in the storage part 21 of the PC 2. The serviceman 3 transfers the control program 105 to the lighting unit 1 via wireless communication. The transferred control program 105 is stored into the memory 142. The control program 105 is also a program generated by the program generation device of the present invention.

It is assumed, for example, that the additional sensor 4 is an illuminance sensor. The additional sensor 4 detects the illuminance in the parking area and notifies the CPU 141 of the detection information through the I/O controller 143. The CPU 141 executes the control program 105, and when the detection information of the illuminance is inputted thereto, the CPU 141 generates a control signal in accordance with the illuminance. The output of the LED 11 is controlled by the generated control signal.

On the basis of the control program 105, the CPU 141 generates a control signal to turn off the LED 11 when the parking area has sufficiently high illuminance, for example, during the day. When it is slightly dark in the parking area, the CPU 141 generates a control signal to light the LED 11 with 50 % output. When it is dark in the parking area in the evening, the CPU 141 generates a control signal to light up the LED 11 with 100 % output. The control signal generated by the CPU 141 is outputted to the LED driver 12, and the LED driver 12 controls the LED 11 on the basis of the control signal. Thus, the lighting setting of the LED 11 is changed on the basis of the sensing information and the operation is determined by the control program 101 corresponding to the sensor 15 and/or the control program 105 corresponding to the additional sensor 4. For easy understanding, discussion is made on the case where the control program 105 is added to perform the control in accordance with the additional sensor 4. Though there may be a case where the control program 105 is also executed besides the control program 101, if the control in accordance with the additional sensor 4 is performed additionally to the control in accordance with the sensor 15, the control program 101 may be so revised as to be corresponding to both the sensors.

### {4. Procedure of Specification Change of Lighting System}

It is assumed that a user requests that the lighting setting of the lighting system should be changed. The user uses a human body sensor as the sensor 15 and uses the lighting system as a warning system. At present, the LED 11 is controlled so as to be lit up with 100 % output when a human body is detected. The user, however, desires that the LED 11 should be blinked at intervals of 0.1 seconds in order to warn more strongly when a human body is detected. Further, though the LED 11 is controlled so as to be lit white by adjusting the outputs of RGB at present, the user desires that the LED 11 should be blinked in red in order to warn more strongly.

In response to the changes, a provider of the lighting system revises the control program 101 by using the program generation device described later. Specifically, the control program 101 is revised so that such a control signal can be generated as to blink the LED 11 in red in response to an input of the detection information of a human body.

The serviceman 3 installs the updated control program 101 into the PC 2 and then goes to a place in which the lighting unit 1 is set up. The serviceman 3 moves up to near the lighting unit 1 and transfers the updated control program 101 to the lighting unit 1 from the PC 2 via wireless communication. In the lighting unit 1, the control program 101 stored in the memory 142 is updated. When the update of the control program 101 is completed normally, a message indicating a normal end is displayed on the LCD 19. Alternatively, a not-shown display LED may be lit up green. The serviceman 3 can thereby confirm that the update is completed. When the update of the control program 101 causes an error, for example, an error message is displayed the LCD 19. Alternatively, a not-shown display LED may be blinked in red, to thereby notify the serviceman 3 of occurrence of the error.

It is assumed that the user requests that a new sensor should be added to the lighting system. The user originally controls the lighting setting by using the human body sensor which is attached by default. The user desires to additionally attach an illuminance sensor to the lighting system and perform the control of the lighting setting in accordance with the illuminance, together with the control in accordance with the detection of a human body. Further, the user desires to change the color of lighting to a warm color during the night in order to change the atmosphere in the facility.

The provider of the lighting system generates a control program 105 corresponding to the additional sensor 4, i.e., the illuminance sensor. The control program 105 is a program used to control the lighting setting on the basis of the detection information from the illuminance sensor. Alternatively, the provider of the lighting system may revise the control program 101. The revised control program 101 is a program used to acquire the detection information from the human body sensor and the detection information from the illuminance sensor and control the lighting setting on the basis of these two pieces of detection information.

When the new or revised control program is completed, the serviceman 3 installs the control program into the PC 2 and then goes to a place in which the lighting unit 1 is set up. The serviceman 3 attaches the illuminance sensor to the sensor connector 16 of the lighting unit 1 as the additional sensor 4. The serviceman 3 transfers the new control program 105 or the revised control program 101 to the lighting unit 1 from the PC 2 via wireless communication. If the lighting unit 1 has to be detached from the pole in order to attach the additional sensor 4, the updated control program may be transferred by connecting the PC 2 and the lighting unit 1 with the communication cable.

Thus, in the lighting system of the preferred embodiment, the lighting setting in accordance with the sensing information is determined by software. Therefore, it is possible to easily change the lighting setting only by revising the control program 101. In response to the request of the user, it is possible to freely change the settings of the illuminance of the lighting device and the light emission pattern. In the preferred embodiment, since the LEDs of three colors of RGB are used, it is possible to emit light of various colors and present various illumination patterns in accordance with the request of the user.

Further, since the lighting unit 1 has the wireless unit 17, it is easy to update the control program 101. In the prior art, in order to change the lighting setting in accordance with the sensing information, it is necessary to change a hardware logic circuit, and it therefore takes time and cost. By the lighting system of the present invention, it is possible to change the lighting setting with less time and cost.

### {5. Collection of Log Data}

As discussed above, the log making program 102 is stored in the memory 142. The log making program 102 is a program used to record the log of the control signal outputted from the CPU 141 to the LED 11. The log making program 102 accumulates the logs of the control signals as log data 103 in the memory 142.

By consulting the log data 103, it is possible to know how the LED 11 was lit with what output, or how long the LED 11 was lit. Further, since the RTC 145 is connected to the CPU 141, the log making program 102 records the logs of the control signals outputted to the LED 11, together with signal generation time information, into the log data 103. It is thereby possible to analyze the operating conditions of the lighting unit 1 by time zone in various manners.

### {6. Program Generation Device}

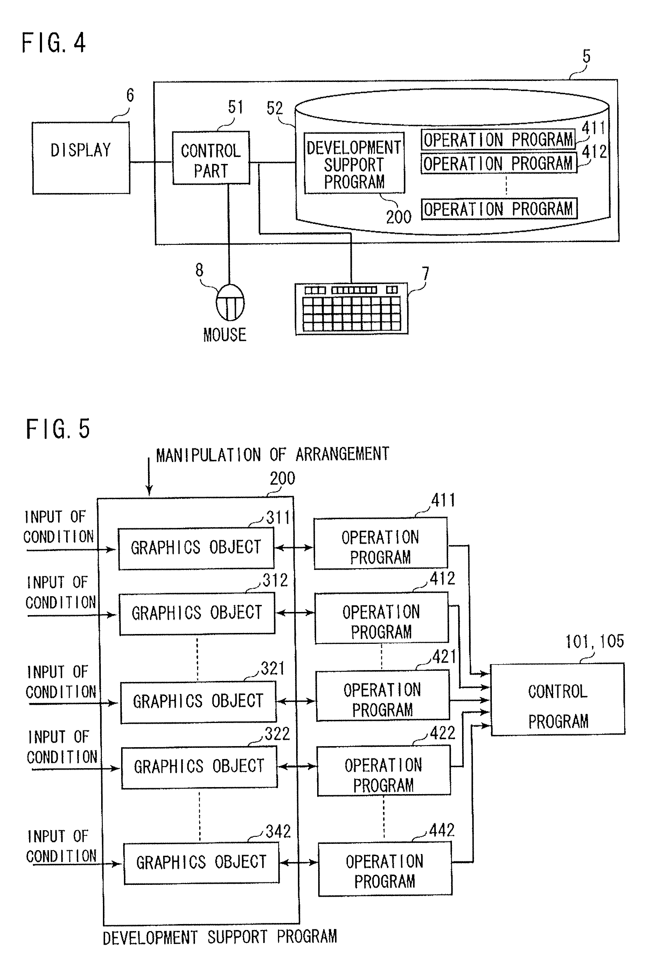

Next, description will be made on a PC 5 serving as a program generation device in accordance with a preferred embodiment of the present invention. Fig. 4 is a block diagram showing the PC 5. The program generation device of the preferred embodiment is constituted of the PC 5, programs installed in the PC 5, and the like.

The PC 5 comprises a CPU, a RAM, and the like, and further comprises a control part 51 for generally controlling the PC 5. The PC 5 still further comprises a hard disk 52 for storing various programs therein.

To the control part 51, connected are a display 6, a keyboard 7, and a mouse 8. An operator generates the control program 101 or 105 used in the above-discussed preferred embodiment, by using a graphical user interface displayed on the display 6 and manipulating pointing devices such as the keyboard 7, the mouse 8, and the like.

In the hard disk 52, stored is a development support program 200. The development support program 200 is a tool for generating control programs, including the control program 101 or 105, to be used for controlling the lighting unit 1. As a user is called an "operator" instead of a "programmer", by using the development support program 200, even the user who has no programming knowledge can easily generate the control programs.

In the hard disk 52, operation programs 411, 412, ... are stored. The operation programs 411, 412, ... are program modules for controlling the LED 11. The operation programs 411, 412, ... are split modules which correspond to divided ones of an operation of the LED 11. The operation programs 411, 412, ..., for example, are a module serving as a trigger for turning on lighting, a module defining an operation for turning on lighting, a module defining an operation for turning off lighting, and the like.

Fig. 5 is a view showing a relation between the objects relating to generation of programs and the programs. As discussed above, as the program modules for controlling the LED 11, a plurality of operation programs 411, 412, ... are prepared. The development support program 200 has graphics objects 311, 312, ... corresponding to the operation programs 411, 412, ..., respectively. The operator can generate the control program 101 or 105 and the like by manipulating the graphics objects 311, 312, ... displayed on the display 6. On an image of the graphics object, displayed are characters representing a function and an operation of the corresponding operation program. Alternatively, on the image of the graphics object, displayed is a graphic or a sign representing the function and the operation of the corresponding operation program.

Specifically, the operator sets operating conditions of the LED 11 to the graphics objects 311, 312, ... displayed on the display 6, to thereby set parameters to the corresponding operation programs 411, 412, ..., respectively. The operator manipulates the arrangement of the graphics objects 311, 312, ... on the display 6, to thereby determine the order of execution of the corresponding operation programs 411, 412,..., respectively.

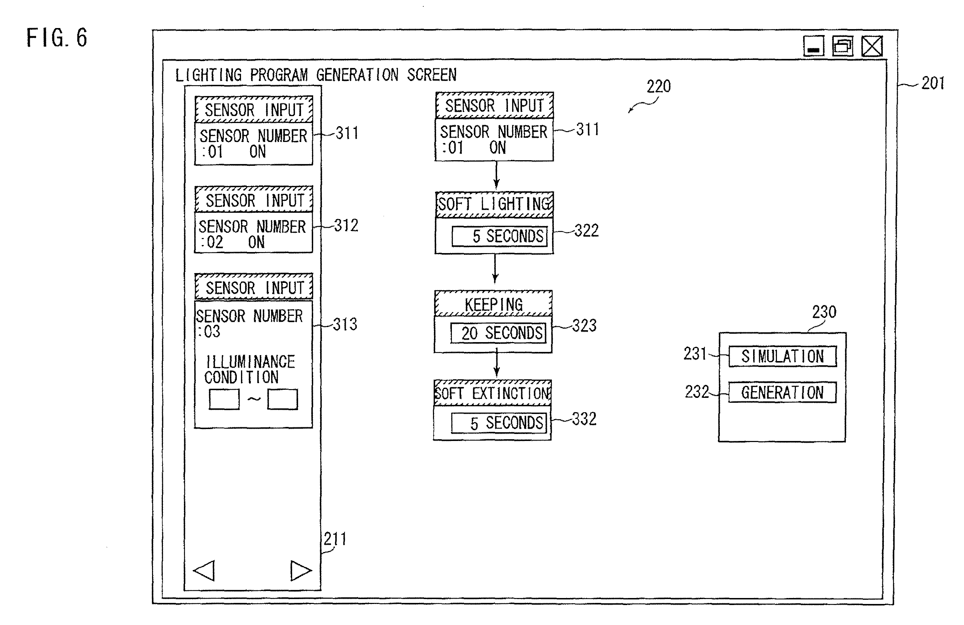

Fig. 6 is a view showing a lighting program generation screen 201 which is a graphical user interface of the development support program 200. The operator uses the lighting program generation screen 201 displayed on the display 6 to generate the control program, by manipulating the keyboard 7 and the mouse 8.

The lighting program generation screen 201 has an object arrangement area 220 near the center of the screen. The operator can determine the order of execution of the operation programs 411, 412, ... by arranging the graphics objects 311, 312, ... in the object arrangement area 220.

The lighting program generation screen 201 has an object selection menu 211 on the left side of the screen. In the object selection menu 211, the graphics objects 311 to 313 are displayed. The operator can drag the graphics objects 311 to 313 displayed in the object selection menu 211 with the mouse 8 and drop the objects in the object arrangement area 220.

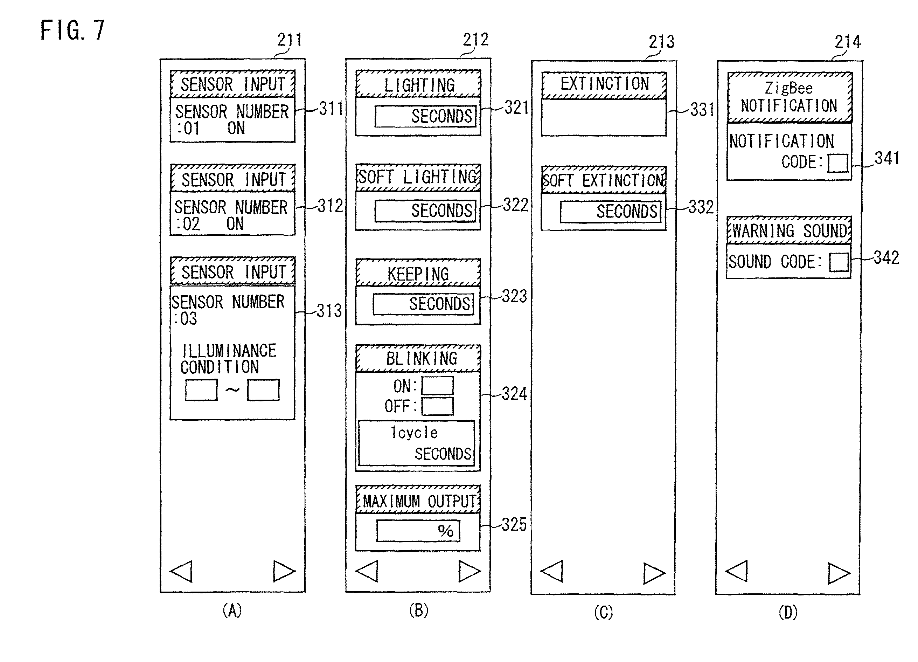

The operator can switch an object selection menu to another one by clicking one of arrow buttons displayed in the lower portion thereof with the mouse 8. Figs. 7(A) to 7(D) show object selection menus 211 to 214, respectively, which are switchingly displayed.

In the object selection menu 211 shown in Fig. 7(A), displayed are the graphics objects 311 to 313 corresponding to the operation programs 411 to 413 relating to sensor inputs. As shown in the figure, in each of the graphics objects 311, 312, and 313, "Sensor Input" is displayed as the characters representing the function of the corresponding operation program. Alternatively, a graphic representing a sensor may be displayed in each of the graphics objects 311, 312, and 313.

The graphics object 311 corresponds to the operation program 411 which defines that the control of the LED 11 is started when detection information of a human body is inputted from a human body sensor having a sensor number of "01". The graphics object 312 corresponds to the operation program 412 which defines that the control of the LED 11 is started when detection information of a human body is inputted from a human body sensor having a sensor number of "02". The graphics object 313 corresponds to the operation program 413 which defines that the control of the LED 11 is started when detection information of the illuminance is inputted from an illuminance sensor having a sensor number of "'03".

In the object selection menu 212 shown in Fig. 7(B), displayed are the graphics objects 321 to 325 corresponding to the operation programs 421 to 425 relating to lighting patterns. As shown in the figure, in the graphics object 321, "Lighting" is displayed as the characters representing the function of the corresponding operation program. Alternatively, a graphic representing a state where a lamp is lit may be displayed in the graphics object 321. Further, in the graphics object 324, a graphic representing a state where a lamp is blinked may be displayed.

The graphics object 321 corresponds to the operation program 421 for successively lighting the LED 11 for a set time period. The graphics object 322 corresponds to the operation program 422 for gradually increasing the output of the LED 11 up to the maximum output which is set, while it takes a set time. The graphics object 323 corresponds to the operation program 423 for keeping the state which is controlled by the preceding operation program for a set time period. The graphics object 324 corresponds to the operation program 424 for blinking the LED 11 at a set timing. The graphics object 325 corresponds to the operation program 425 for setting a maximum output value in the case where the LED 11 is lit up. Though not shown, a graphics object corresponding to an operation program for setting a minimum output value of the LED 11 is also prepared.

In the object selection menu 213 shown in Fig. 7(C), displayed are the graphics objects 331 and 332 corresponding to the operation programs 431 and 432 relating to extinction patterns. As shown in the figure, in the graphics object 331, "Extinction" is displayed as the characters representing the function of the corresponding operation program. Alternatively, a graphic representing a state where a lamp is off may be displayed in the graphics object 331.

The graphics object 331 corresponds to the operation program 431 for giving an instruction to extinguish the LED 11. The graphics object 332 corresponds to the operation program 432 for gradually decreasing the output of the LED 11 until the LED 11 is extinguished or for decreasing the output of the LED 11 to the minimum output value, while it takes a set time.

In the object selection menu 214 shown in Fig. 7(D), displayed are the graphics objects 341 and 342 corresponding to the operation programs 441 and 442 relating to notification. As shown in the figure, in the graphics object 341, "ZigBee Notification" is displayed as the characters representing the function of the corresponding operation program. Alternatively, a symbolic graphic representing wireless communication or notification may be displayed in the graphics object 341.

The graphics object 341 corresponds to the operation program 441 for giving notification to the outside by using ZigBee. The graphics object 342 corresponds to the operation program 442 for giving a warning by sound.

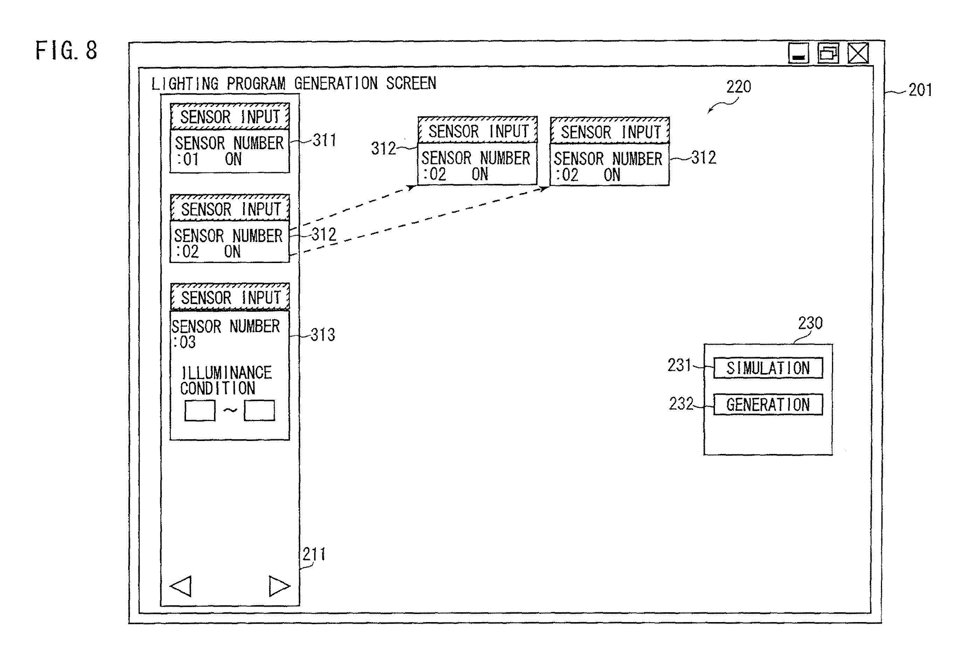

Next, with reference to Figs. 8 to 12, discussion will be made on a procedure of generating the control program by using the development support program 200.

The operator causes the object selection menu 211 to be displayed in the lighting program generation screen 201 as shown in Fig. 8. The operator drags the graphics object 312 with the mouse and drops the object in the object arrangement area 220. Subsequently, the operator drags the graphics object 312 with the mouse and drops the object in the object arrangement area 220 again.

The graphics object 312 corresponds to the operation program 412 which defines that the control of the LED 11 is started when the detection information is inputted from the human body sensor having the sensor number of "02". Specifically, by arranging the graphics object 312, it is defined that the control based on the detection information from the sensor having the sensor number of "02" is started.

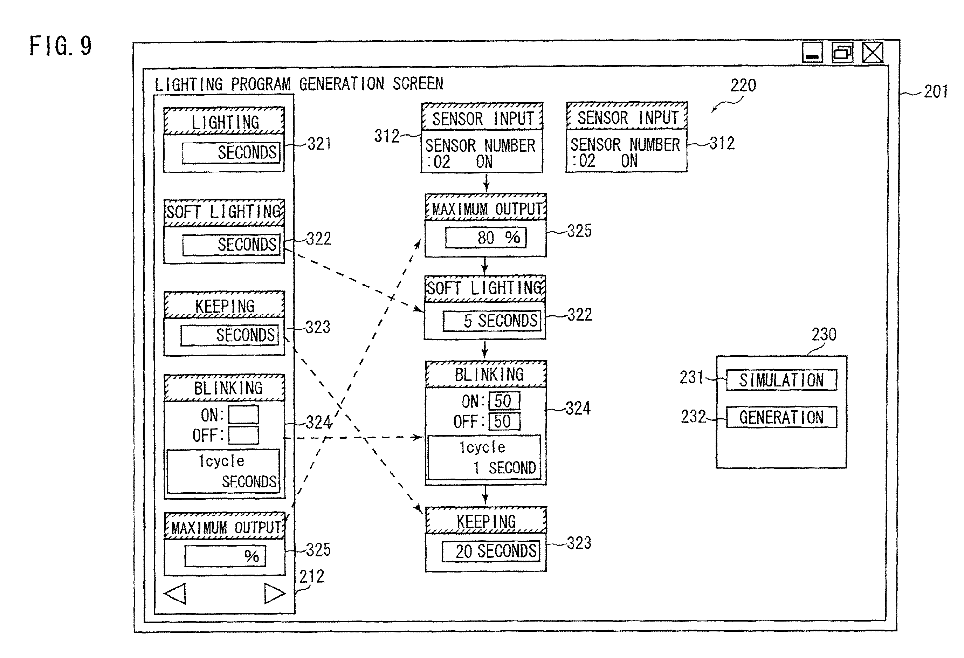

Next, the operator causes the object selection menu 212 to be displayed in the lighting program generation screen 201 as shown in Fig. 9. The operator first drags the graphics object 325 with the mouse 8 and drops the object below one of the two graphics objects 312, which is positioned on the left side. Subsequently, the operator drags the graphics object 322 with the mouse 8 and drops the object below the graphics object 325. Further, the operator drags the graphics object 324 with the mouse 8 and drops the object below the graphics object 322. Finally, the operator drags the graphics object 323 with the mouse 8 and drops the object below the graphics object 324.

The graphics object 325 is an object which defines the maximum output at the time when the LED 11 is lit up. The operator clicks the graphics object 325 with the mouse 8 to select the object and then sets the maximum output by manipulating the keyboard 7. In this case, the maximum output is set as 80 % as shown in the figure. Though not set in the exemplary case discussed herein, the minimum output may be set by inserting a graphics object which defines the minimum output.

The graphics object 322 is an object corresponding to the soft lighting. The operator sets a time period for the soft lighting with respect to the graphics object 322. In this case, the time period is set as 5 seconds as shown in the figure. By arranging the graphics objects 312, 325, and 322 and making the settings as shown in the figure, it is defined that the control should be made so that when the detection information is inputted from the human body sensor having the sensor number of "02", the LED 11 is lit up to the maximum output of 80 % in a soft lighting manner while it takes 5 seconds.

The graphics object 324 is an object corresponding to the blinking. The operator sets a timing for the blinking with respect to the graphics object 324. In this case, it is set that ON: 50, OFF: 50, and Cycle: 1 second, as shown in the figure. This setting indicates that blinking is repeated at a duty ratio of 50 % in a cycle of 1 second. By arranging the graphics objects 312, 325, 322, and 324 and making the settings as shown in the figure, it is defined that the control should be made so that when the detection information is inputted from the human body sensor having the sensor number of "02", the LED 11 is lit up to the maximum output of 80 % in a soft lighting manner while it takes 5 seconds, and after that, the LED 11 is blinked.

The graphics object 323 is an object relating to the keeping. The operator sets a time period for keeping the state with respect to the graphics object 323. In this case, the time period is set as 20 seconds as shown in the figure, and it is therefore set that the preceding operation state should be kept for 20 seconds. The object relating to the keeping is an object for keeping the preceding operation of the LED 11. It is defined that the LED 11 should be lit up to the maximum output in a soft lighting manner while it takes 5 seconds, and after that, the LED 11 should be blinked for 20 seconds.

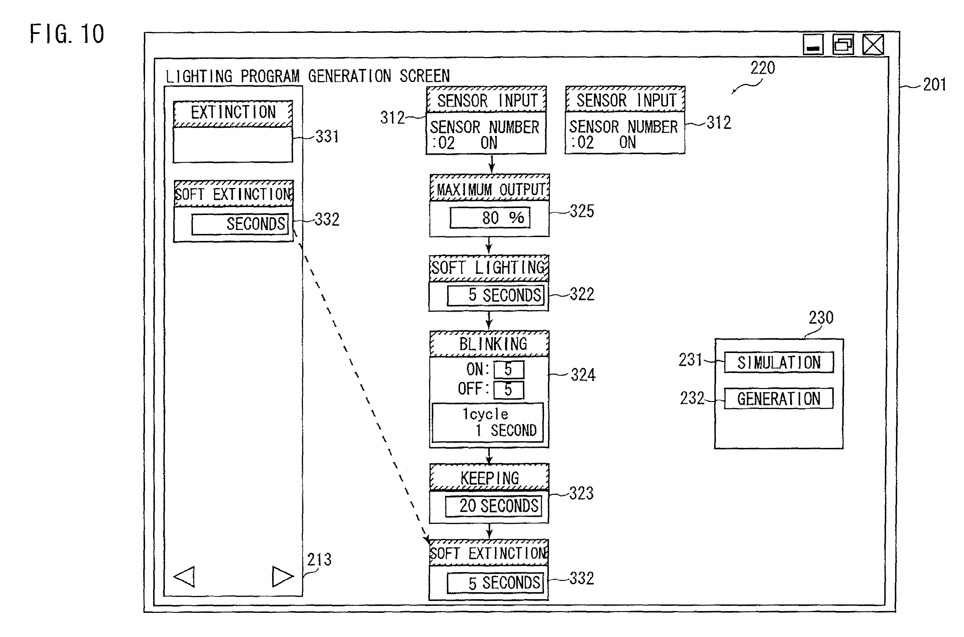

Next, the operator causes the object selection menu 213 to be displayed in the lighting program generation screen 201 as shown in Fig. 10. The operator drags the graphics object 332 with the mouse 8 and drops the object below the graphics object 323 which is arranged in the object arrangement area 220.

The graphics object 332 is an object for extinguishing the LED 11 in a soft extinction manner. The operator sets a time period for the soft extinction with respect to the graphics object 332. In this case, the time period is set as 5 seconds as shown in the figure. The LED 11 is thereby controlled to be blinked for 20 seconds and then decrease the output while it takes 5 seconds so that the LED 11 will be extinguished after the elapse of 5 seconds.

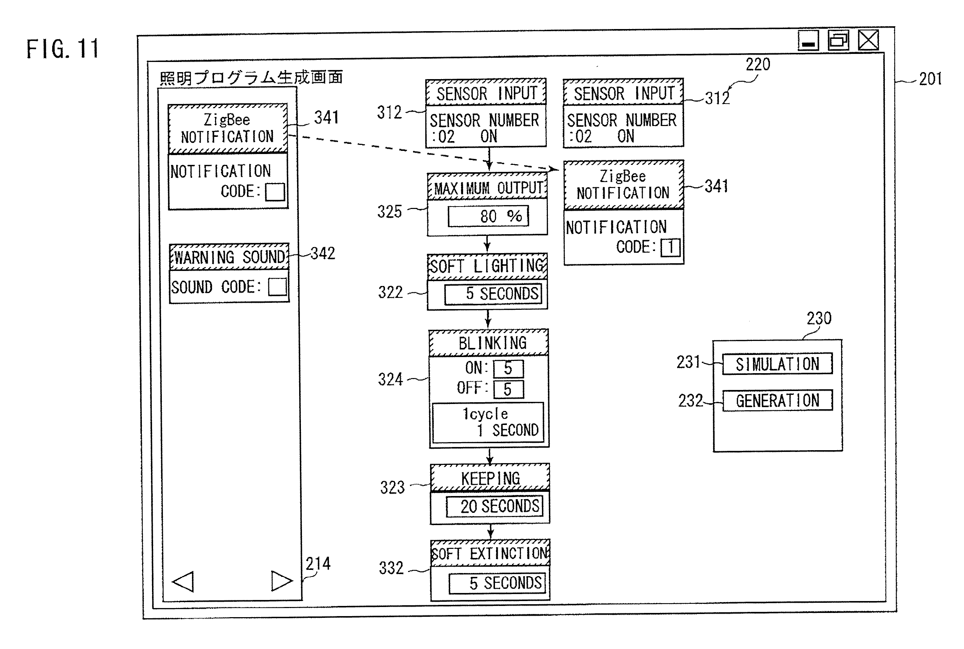

Next, the operator causes the object selection menu 214 to be displayed in the lighting program generation screen 201 as shown in Fig. 11. The operator drags the graphics object 341 with the mouse 8 and drops the object below the graphics object 312 which is arranged on the right side in the object arrangement area 220.

The graphics object 341 is an object for giving notification by using ZigBee. The operator clicks the graphics object 341 with the mouse 8 to display a not-shown property screen and sets a notification target and a notification content. It is thereby defined that the lighting unit 1 gives a warning to the outside by using ZigBee when the detection information is inputted from the human body sensor having the sensor number of "02".

Thus, the arrangement of the graphics objects in a longitudinal direction in the object arrangement area 220 defines the order of execution of the operation programs. Further, the arrangement of the graphics objects in a lateral direction in the object arrangement area 220 defines the operation programs which are performed concurrently.

In the case of Fig. 11, the two longitudinal columns of the objects are arranged in the object arrangement area 220. The left column indicates the chronological execution of the operation programs 412 -> 425 -> 422 -> 424 -> 423 -> 432. The right column indicates the chronological execution of the operation programs 412 -> 441. Further, the graphics objects 325 and 341 are arranged in the lateral direction, and this indicates that the corresponding operation programs 425 and 441 are performed concurrently. Specifically, the maximum output of the LED 11 is set as 80 % and the notification using ZigBee is concurrently given. The concurrent processing herein, however, indicates not only the concurrent processing in a strict meaning (for example, a processing using a dual processor) but also processings which are performed in a relatively close time period (for example, processing using time slicing).

Thus, the operator can determine the order of execution of the operation programs 411, 412, ... which define the operations of the LED 11 only by controlling the arrangement of the graphics objects 311, 312, ... in the lighting program generation screen 201 with the manipulation of the mouse 8. It is thereby possible to generate the control program 101 or 105 which defines the operations of the lighting unit 1 which change in accordance with the environment and time, with very easy manipulation. It is also possible to generate the control programs which define operations of various equipments which change in accordance with the environment and time, with easy manipulation.

Since the arrangement of the graphics objects 311, 312, ... in the longitudinal direction in the object arrangement area 220 directly indicates the order of operations of the lighting unit 1, it is possible to grasp the entire flow of operations of the lighting unit 1 at a glance. In each of the graphics objects 311, 312, ..., characters clearly representing the content of the operation are displayed as a caption, as shown in Figs. 6 to 11. The character string such as "Soft Lighting", "Keeping", "Soft Extinction", "ZigBee Notification", or the like is displayed in an image of the object. Alternatively, a graphic or a sign representing the operation or the function is displayed. In a normal program code, in order to know the entire flow of the program, it is necessary to trace the module names or the like written at the top of the program code. In the preferred embodiment, however, by looking at the object arrangement area 220, it is possible to grasp the flow of the program at a glance.

Further, in each of the graphics objects 311, 312, ..., a set content is displayed. In the case of soft lighting, for example, "5 seconds" is displayed. Thus, the important set content which characterizes the operation is displayed on the image of the object. Therefore, the operator can visually grasp the operation flow of the lighting unit 1 more accurately.

In order to set parameters for the operation programs 411, 412, ..., the operator has only to select the graphics objects 311, 312, ... and change the set values displayed on the graphics objects. Alternatively, the operator has only to display the property screen of the graphics object and change the set value. There may be a case, for example, where the most important set content which defines the operation is displayed on the graphics object and other detailed set contents can be set in the property screen. Since the important set content is displayed on the graphics object, it becomes easier to grasp the entire flow of processing.

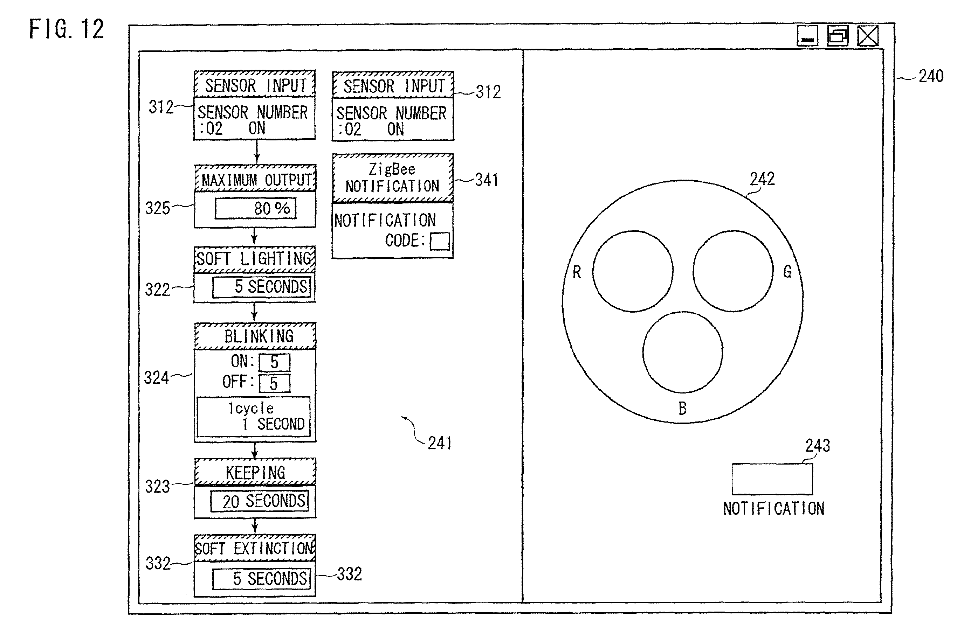

When the arrangement of the graphics objects 311, 312, ... and the setting relating thereto are completed, the operator clicks a simulation button 231 displayed in an execution menu 230 with the mouse 8. A simulation screen 240 shown in Fig. 12 is thereby displayed on the display 6.

The simulation screen 240 has a processing flow display part 241, a lighting simulation part 242, and a notification simulation part 243. In the processing flow display part 241, the arrangement of the graphics objects which are arranged by the operator is displayed. In the lighting simulation part 242, displayed is an image for simulating respective illumination lights of RGB. When the simulation starts, the graphics object to be currently processed is highlighted in the processing flow display part 241. Then, the illumination light corresponding to the highlighted graphics object is simulated in the lighting simulation part 242. The simulation part 242 simulates the lighting, the blinking, the soft lighting, the soft extinction, or the like with the set color of light in accordance with the setting of the graphics object. Further, the notification is simulated by lighting the notification simulation part 243. As to the warning by sound, the PC 5 has only to actually output sound. The operator can get an image of the lighting pattern even without actually generating the control program 101 or 105 and installing the program into the lighting unit 1.

If the result which is checked in the simulation screen 240 is different from the expectation that the operator has in his mind, the operator may go back to the lighting program generation screen 201 and adjust the arrangement of the graphics objects and the set contents. The operator performs an operation, for example, of changing the order of the graphics objects 311, 312, ..., inserting the other graphics objects 311, 312, ... into the arrangement of the graphics objects 311, 312, ..., or deleting some of the graphics objects 311, 312, ... from the arrangement. Alternatively, the operator changes the set contents of the graphics objects 311, 312, .... After completing the change operation, by clicking the simulation button 231 again, it is possible to quickly check the changed contents in the simulation screen 240.

After repeating the operation in the lighting program generation screen 201 and the check operation in the simulation screen 240, when the check result is coincident with the expectation which the operator has in his mind, the operator clicks a generation button 232 with the mouse 8. The control program 101 or 105 obtained by combining a plurality of operation programs 411, 412, ... together is thereby generated.

Though not shown in Fig. 4, the generated control program 101 or 105 is stored into the hard disk 52. The operator stores a copy of the generated control program 101 or 105 into the storage part 21 in the PC 2 which the serviceman 3 uses. After that, the process is as discussed earlier. The serviceman 3 updates the control program 101 or 105 of the lighting unit 1 which is set up in the parking area.

Though discussion has been made on the case where the control program 101 or 105 generated by the operator is stored in the PC 2 and serviceman 3 updates the program on site, the operator himself may carry the PC 5 to the site and update the program. The operator transfers the control program 101 or 105 from the PC 5 via wireless communication and installs the program into the lighting unit 1. In order to make this operation possible, a wireless communication function using ZigBee or the like has only to be mounted also in the PC 5.

After transferring the control program 101 or 105 to the lighting unit 1 from the PC 5 and installing the program therein, the operator checks the operations. If the result of the operation check is different from the expectation that the operator has in his mind, the operator manipulates the PC 5 to update the control program 101 or 105 on site. The operator starts up the development support program 200 and performs fine adjustments of the above-discussed work or the like, to thereby update the control program 101 or 105. After completing the update operation, the operator transfers the control program 101 or 105 to the lighting unit 1 from the PC 5 again. Thus, though it conventionally takes time and cost to change the specification of the lighting system, it is possible to easily change the specification of the lighting system in a short time by using the development support program 200.

While the invention has been shown and described in detail, the foregoing description is in all aspects illustrative and not restrictive. It is therefore understood that numerous modifications and variations can be devised without departing from the scope of the invention.

## Claims

1. A program generation device for generating a program by using a graphical user interface, comprising:
a graphics object providing part for displaying a plurality of types of graphics objects on a display connected to said program generation device to provide said plurality of types of graphics objects in a selectable manner, said plurality of types of graphics objects representing operations corresponding to a plurality of types of operation programs which define operations of a lighting device;
an object arranging part for causing a plurality of graphics objects to be selected out of said plurality of types of graphics objects by using a pointing device and arranging said plurality of selected graphics objects in an object arrangement area displayed on said display; and
a generation part for generating a control program which controls said lighting device by associating an arrangement relation of said plurality of graphics objects arranged by said object arranging part with a chronological relation of a plurality of operation programs which are selected.

2. The program generation device according to claim 1, wherein
said object arranging part associates an arrangement of said plurality of arranged graphics objects in one direction with a chronological relation of programs, and associates an arrangement thereof in a direction orthogonal to said one direction with a relation of programs which concurrently operate.

3. The program generation device according to claim 1, wherein
said plurality of types of operation programs include
a setting type program for setting an operating condition, and
said setting type program includes
an operating condition setting part for displaying said operating condition in a rewritable manner in an image of a corresponding graphics object displayed on said display.

4. The program generation device according to claim 3, wherein
said operating condition includes
a duration of an operation of said lighting device, which is defined by said setting type program.

5. The program generation device according to claim 3, wherein
said operating condition includes
a maximum/minimum output intensity of an operation of said lighting device, which is defined by said setting type program.

6. The program generation device according to claim 1, further comprising:
a simulation part for simulating a light emission manner of said lighting device in accordance with a set condition on said display; and
a program check part for causing said simulation part to simulate an operation of said lighting device before being controlled by said control program.

7. A program generation device for generating a program by using a graphical user interface, comprising:
a graphics object providing part for displaying a plurality of types of graphics objects on a display connected to said program generation device to provide said plurality of types of graphics objects in a selectable manner, said plurality of types of graphics objects representing operations corresponding to a plurality of types of operation programs which define operations of an equipment;
an object arranging part for causing a plurality of graphics objects to be selected out of said plurality of types of graphics objects by using a pointing device and arranging said plurality of selected graphics objects in an object arrangement area displayed on said display; and
a generation part for generating a control program which controls said equipment by associating an arrangement relation of said plurality of graphics objects arranged by said object arranging part with a chronological relation of a plurality of operation programs which are selected.
